# EUROPEAN PATENT SPECIFICATION

(11) **EP 1 832 163 B1**
(45) Date of publication and mention of the grant of the patent: **06.05.2009**
(21) Application number: 07075200.1
(22) Date of filing: 01.03.2007
(51) Int. Cl.: A01K 61/00

(54) **Method for processing mussels**
Verfahren zur Verarbeitung von Muscheln
Méthode de traitement de moules

(30) Priority: 06.03.2006 NL 1031305
(43) Date of publication of application: 12.09.2007
(73) Proprietor: Baroc B.V., 4401 NV Yerseke (NL)
(72) Inventor: Barbé, Eduard Hermin Maria, 4401 HN Yerseke (NL)
(74) Representative: Dorna, Peter

(56) References cited:
- NL-C1- 1 007 744
- NL-C2- 1 024 663
- US-A- 5 186 121
- US-B2- 6 837 183

## Description

The present invention relates to a method for processing mussels, wherein mussels are fished by means of a vessel and brought aboard.

Such a method is known per se from Dutch patent NL 1024663, in which a quantity of mussels, prior to cleaning, is placed in one or more storage containers on the shore in cooled sea water, which cooled sea water flows through the storage containers and is processed in a recirculation system for re-use in the storage containers. Using such a method, at least part of the commercial stock of mussels in the storage containers would be directly available for further processing, so that the processing of a quantity of mussels could take place at any desired moment. Thus, the processing logistics could be geared more suitably to the expected demand for packaged mussels. In addition to that, storing a stock of mussels in cooled sea water would provide an adequate conditioning of the mussels, thereby enabling prolonged storage thereof.

From Dutch patent NL 1007744 there is known a method for the cultivation, conditioning and storage of mussels regardless of the season, in which three separate stages are distinguished, viz. a first processing stage, a second processing-storage stage and a third preservation stage. In the first processing stage, the mussels are pre-cleaned and pre-selected after being landed, after which the thus pre-selected mussels are placed in conditioning containers. In the second processing stage, the mussels are subjected to further conditioning, and in the preservation stage the mussels are subjected to a so-called cold shock treatment, after which the mussels are deep-frozen.

From US patent US 5,186,121 there is known a method and arrangement for cleaning crustaceans on shore, in which sea water is used for washing the crustaceans.

Mussels are molluscs which in the Netherlands are found especially in the Waddenzee and in the Oosterschelde. Seed mussels attach themselves to the seabed by means of so-called "byssus threads", also called "beards", via which mussels may also attach to each other or to objects. The current mussel culture may be considered to be a form of "aquaculture", with silt and sand inevitably finding their way into the shell when grown mussels are being harvested. To get rid of these undesirable substances, mussels are taken to so-called "conditioning sites", where they can settle down after their journey and excrete undesirable substances, such as sand.

Mussels are creatures which are highly sensitive to environmental conditions. This means that optimum living conditions are essential for a good growth of the mussel. Moreover, the mussel is fished from an aqueous environment, which means that there is a rather significant risk that the mussel shell will break when the catch is hauled aboard resulting in a loss of a valuable product. In addition to that, the catch will not only consist of mussels but also of other elements such as oysters, other crustaceans, loose shells, pollocks, crabs and starfish, which are not fit for consumption.

Thus it is an object of the present invention to provide a method for processing mussels in which the natural living conditions of the mussels are maintained as much as possible and if necessary optimised directly after harvesting.

Another object of the present invention is to provide a method for processing mussels which minimises the risk of the mussel shells breaking when the catch is hauled aboard.

Yet another object of the present invention is to improve the yield of breeding sites where mussels grow.

Another object of the present invention is to provide a method for processing mussels in which the natural living conditions of the mussels are simulated as much as possible and if necessary optimised during the entire cycle from harvesting to the packaging of the mussels so as to minimise the loss of product.

Another object of the present invention is to provide a method for processing mussels in which the mussels are separated from the non-mussel elements at the earliest possible stage, so that only mussels will be handled during the further mussel processing stages.

The present invention as mentioned in the introduction is characterised in that the harvested mussels are processed on board directly after the catch has been hauled aboard the vessel, said processing comprising the steps of
i) removing non-mussel elements from the catch,
ii) possibly detaching the mussels obtained in step i) from each other, and
iii) grading the mussels obtained in step i) according to size,
wherein at least one of the steps i)-iii) is carried out in the presence of an additional amount of water.

One or more of the above objects are achieved by carrying out the steps i)-iii). It is in particular important that the natural living conditions of the mussels be simulated already on board the vessel by using water, so that the life span of the mussel will be endangered as little as possible. Since the catch is already brought into contact with an additional amount of water on board the vessel, the mussel is maintained in its natural living environment. The term "additional amount of water" is understood to mean an extra amount of water in relation to the amount of salt water that will inevitably adhere to the catch, which additional water is for example supplied via a system of pipes on board the vessel. Said water is for example salt water, in particular sea water. In the present specification, the term "water" is used consistently, which term may also be read as "salt water" or "sea water". The yield of the breeding site will be enhanced by removing the non-mussel elements, for example of starfish, one of the natural enemies of mussels, from the catch. Moreover, the mussels are already detached from each other as much as possible in step i). By detaching the mussels from each other as much as possible, the yield will be enhanced. This form of thinning out will enable in particular the smaller mussels from the bunch to develop more quickly and more successfully upon returning to the cultivating process. By furthermore grading the mussels according to size, in which the mussels that are not ready for the market yet can be returned to the cultivating process, the yield of the site will increase significantly.

In the present invention it is preferable that the catch is brought aboard in such a manner that the harvested mussels are lowered into a water-filled space. By doing so, the fragile shell of the mussel is prevented from being damaged on board already. By lowering the catch into a space that is filled with water, for example sea water, the fall of the mussels will be broken in a natural manner, so that the mussels will not make a hard landing on the floor of the vessel's hold, so that breakage of the shells is minimised. After the catch has been lowered into the hold, it can be washed or cleaned with water, for example sea water, and step i) can in fact be carried out directly. Cleaning the catch in this manner thus comprises the removal of sand, silt, seaweed particles and additional loose elements. Additional non-mussel elements are for example loose shells, pollocks, crabs and starfish. Previously the catch was deposited on the floor of the vessel's hold, resulting in considerable breakage of the shells, because the shells did not survive the impact with the floor.

For a good conditioning of the mussels, in particular reducing their metabolism to a minimum, it is desirable that the water be cooled to a temperature at least 2° lower than the temperature of the sea water from which the mussels have been harvested. This means that during summery periods, when the sea water can reach a temperature of 18 °C, good results are already obtained at temperatures below 16 °C, in particular below 10 °C.

To realise an even more optimum natural environment for the mussels, it is preferable to supply oxygen to the water, possibly in combination with the addition of algae to the water.

In a special embodiment it is also possible to subject the water to a disinfection treatment on board the vessel, which treatment may be selected from irradiation with UV light and/or passing ozone therethrough.

In a special embodiment it is desirable that the water in which the mussels are kept on board the vessel is purified during the time the mussels are present therein, in particular by using one or more filter units for intercepting harmful substances or bacteria, sand, silt, proteins and/or organic material, wherein it is in particular preferable that the water used in steps i)-iii) be recycled.

The sorting step iii) is preferably carried out in such a manner that mussels below a specified size are returned to the location where the catch took place, in particular the breeding site. It should be understood that the breeding site may be the same site or a site situated further away. Said returning may take place either directly or after the mussels have stayed on board the vessel for some time. Thus, small-sized mussels are given an opportunity to grow further until they have reached the desired size. In addition, specific sites may be provided with mussels of a specific size, so that market-ready mussels can be harvested from other sites. In this way a certain improvement is effected, as well as a continuous supply of market-ready mussels. Such a measure moreover achieves that live material is not unnecessarily considered as waste, and that according to the present invention a system of "durable" aquaculture is realised. Returning the mussels that are not ready for the market via the shortest route, viz. from the ship directly into the sea, in particular to the breeding site, prevents unmarketable elements being transported to the conditioning sites, which means a considerable saving in costs. In addition, the unmarketable elements are not cooled unnecessarily, which is advantageous for efficiency reasons. Said sorting may also take place according to various size classes.

Preferably, the mussels obtained after step iii) are stored in separate compartments or spaces on the vessel, in which case containers may be used, for example so-called "big bags". Such compartments may be cooled with water, ice and/or air, and in specific embodiments it is preferable to use a slurry mixture of ice/water. The aforesaid big bag has the advantage that the further transport from the vessel to, for example, conditioning sites can be readily carried out by means of small trucks. Such manageable big bags are transferred from the vessel's hold to a truck by means of a hoisting installation, a special advantage of a big bag construction being the fact that the mussels need not be deposited on a floor again, with the concomitant renewed risk of breakage of the shells. In addition, such big bags are easy to cool and, if desired, moisturise, which is of vital importance in the case of mussels. While the big bags, which may already contain a layer of water, are being filled with mussels, ice may be added simultaneously, for example, so that an optimum cooling effect is achieved. During transport in a truck the cargo may be sprayed with water, which water may subsequently be collected and reused. Such a spraying plant may use salt water or fresh water, an essential goal being to cool the cargo.

In order to influence the life span of the mussels advantageously, it is preferable to place the compartments into contact with water, whilst it is also possible to add oxygen and/or algae to the compartments.

After staying in the compartments on board the vessel and possibly being transported on the shore, the mussels are transferred to the shore for storage in one or more storage basins, through which water flows, before being packaged, which water is preferably cooled to a temperature at least 2 °C lower than the temperature of the seawater, preferably a temperature below 10 °C.

The present invention further relates to a vessel as defined in the claims.

Packaging preferably takes place in airtight and leakproof containers, using packaging machines wherein the label is only affixed after the container has been closed, that is, once the fresh mussels are present in the container and the container has been sealed, more specifically at the end of or near or as near the end of the production process as possible. The container with the packaged fresh mussels will be provided with a code during the packaging process so as to be able to identify the containers with the type of fresh mussels present therein and provide them with the correct label for the customer yet. This implies, therefore, that labelling takes place at the last possible moment within the production process that legal regulations allow. The present invention therefore aims at delaying the moment of definitively assigning the destination of the product, i.e. providing it with a label for the customer, as much as possible within the production process.

An important advantage of this is the fact that a gain in time is realised before the destination of the product to the customer is definitively assigned. After all, a reduction in time is achieved between the reception of the order and the labelling of the product, i.e. assigning the product to the customer. This will have considerable logistic advantages, whilst in addition the need to repackage the product (when too much product has been produced) or restart the production of the same product in the same type of container (when not enough product has been produced) is reduced or eliminated.

An important aspect is thus the fact that the actual packaging within the production process and the provision of a label for the customer take place at different moments.

Based on the present invention, in which a chain of operations is carried out, viz. from harvesting to packaging, it is possible to simulate and if necessary optimise the natural living conditions of the mussels as much as possible, which has a positive effect on the quality of the mussel that is ready for consumption. Moreover, the loss of product due to shell breakage will be minimised when using the present method, whilst in addition a durable aquaculture is realised, because mussels below a specified size are directly returned. In addition to that, the yield of the breeding sites will be enhanced as a result of the removal of the natural enemies of the mussels, for example starfish and crabs. Using the present invention, the smallest mussels (seed mussels) will furthermore be sorted for raising the mussels to half-grown mussels or mussels that are ready for consumption, which half-grown mussels will be available for sale or for being raised to mussels that are ready for consumption. In addition, mussels from which the non-mussel elements have already been removed will be stored in the storage basins on the shore, so that the volume of the storage basins will be optimally utilized in this manner.

## Claims

1. A method for processing mussels, wherein mussels are fished by means of a vessel and brought aboard, **characterised in that** the harvested mussels are processed on board directly after the catch has been hauled aboard the vessel, said processing comprising the steps of
i) removing non-mussel elements from the catch,
ii) possibly detaching the mussels obtained in step i) from each other, and
iii) grading the mussels obtained in step ii) according to size,
wherein at least one of the steps i)-iii) is carried out in the presence of an additional amount of water.

2. A method according to claim 1, **characterised in that** the water used is salt water, in particular sea water.

3. A method according to claim 1, **characterised in that** the catch is brought aboard in such a manner that the catch is lowered into a water-filled space.

4. A method according to any one or more of the preceding claims, **characterised in that** oxygen is supplied to the water.

5. A method according to any one or more of the preceding claims, **characterised in that** algae are added to the water.

6. A method according to any one or more of the preceding claims, **characterised in that** the water is subjected to a disinfection treatment selected from irradiation with UV light and/or passing ozone therethrough.

7. A method according to any one or more of the preceding claims, **characterised in that** the water is purified during the time the mussels are present therein, in particular by using one or more filter units for intercepting bacteria, sand, silt, proteins and/or organic material.

8. A method according to any one or more of the preceding claims, **characterised in that** the water used in one or more of the steps i)-iii) is recycled.

9. A method according to any one or more of the preceding claims, **characterised in that** the mussels obtained after step iii) are stored in separate compartments or spaces on the vessel.

10. A method according to claim 9, **characterised in that** the compartments are partially filled with water before storage therein takes place.

11. A method according to either one or both of the claims 9-10, **characterised in that** a big bag is used as said compartment.

12. A method according to any one or more of the claims 9-11, **characterised in that** oxygen and/or algae are added to the compartments during the time the mussels are kept therein.

13. A method according to any one or more of the claims 9-12, **characterised in that** the compartments are cooled.

14. A method according to claim 13, **characterised in that** said cooling takes place by means of water, ice, an air flow or a combination thereof.

15. A method according to any one or more of the preceding claims, **characterised in that** step iii) is carried out in such a manner that mussels below a specified size are returned to a breeding site.

16. A method according to any one or more of the preceding claims, **characterised in that** the water is cooled to a temperature at least 2 °C lower than the temperature of the sea water.

17. A method according to any one or more of the preceding claims 9-16, **characterised in that** the mussels, after having stayed in the compartments on board the vessel, are transferred to the shore for storage in one or more storage basins, through which water flows, before being packaged.

18. A method according to claim 17, **characterised in that** the water is cooled to a temperature at least 2 °C lower than the temperature of the seawater.

19. A method according to claim 17, **characterised in that** during transport on the shore the temperature of the mussels is maintained at a level substantially equal to or lower than the temperature that prevailed on board the vessel.

20. A method according to any one or more of the claims 17-19, **characterised in that** during transport on the shore the temperature is controlled by cooling with water, ice, air, or a combination thereof.

21. A method according to any one or more of the claims 17-20, **characterised in that** the water used for cooling is reused.

22. A vessel for fishing mussels from the sea and bringing the catch aboard, **characterised in that** said vessel is provided with means for removing non-mussel elements from the catch, means for possibly detaching the mussels from each other, means for grading the mussels according to size, and means for pumping water on board the vessel.

## Patentansprüche

1. Ein Verfahren zur Verarbeitung von Muscheln, bei dem Muscheln mittels eines Schiffs gefischt und an Bord gebracht werden, **dadurch gekennzeichnet, dass** die geernteten Muscheln an Bord verarbeitet werden, unmittelbar nachdem der Fang an Bord des Schiffs gezogen worden ist, wobei die Verarbeitung folgende Schritte aufweist:
i) Entfernen von muschelfremden Elementen aus dem Fang,
ii) eventuell Abtrennen der in Schritt i) erhaltenen Muscheln voneinander und
iii)Klassieren der in Schritt ii) erhaltenen Muscheln nach Größe,
wobei mindestens einer der Schritte i) - iii) in der Gegenwart einer zusätzlichen Menge von Wasser durchgeführt wird.

2. Verfahren gemäß Anspruch 1, **dadurch gekennzeichnet, dass** das verwendete Wasser Salzwasser ist, insbesondere Meerwasser.

3. Verfahren gemäß Anspruch 1, **dadurch gekennzeichnet, dass** der Fang in einer Weise an Bord gebracht wird, dass der Fang in einen mit Wasser gefüllten Raum abgesenkt wird.

4. Verfahren gemäß einem oder mehr der vorangegangenen Ansprüche, **dadurch gekennzeichnet, dass** dem Wasser Sauerstoff zugeführt wird.

5. Verfahren gemäß einem oder mehr der vorangegangenen Ansprüche, **dadurch gekennzeichnet, dass** dem Wasser Algen hinzugefügt werden.

6. Verfahren gemäß einem oder mehr der vorangegangenen Ansprüche, **dadurch gekennzeichnet, dass** das Wasser einer Desinfektionsbehandlung unterzogen wird, die aus Bestrahlung mit UV-Licht und/oder Durchleitung von Ozon durch das Wasser ausgewählt wird.

7. Verfahren gemäß einem oder mehr der vorangegangenen Ansprüche, **dadurch gekennzeichnet, dass** das Wasser während der Zeit, in der die Muscheln sich darin befinden, gereinigt wird, insbesondere durch die Verwendung einer oder mehr Filtereinheiten zum Abfangen von Bakterien, Sand, Schlick, Eiweißstoffen und/oder organischem Material.

8. Verfahren gemäß einem oder mehr der vorangegangenen Ansprüche, **dadurch gekennzeichnet, dass** das in einem oder mehr der Schritte i) - iii) verwendete Wasser im Kreislauf geführt wird.

9. Verfahren gemäß einem oder mehr der vorangegangenen Ansprüche, **dadurch gekennzeichnet, dass** die nach Schritt iii) erhaltenen Muscheln in separaten Abteilungen oder Räumen auf dem Schiff gelagert werden.

10. Verfahren gemäß Anspruch 9, **dadurch gekennzeichnet, dass** die Abteilungen teilweise mit Wasser gefüllt werden, bevor die Lagerung darin stattfindet.

11. Verfahren gemäß entweder einem oder beiden Ansprüchen 9 - 10, **dadurch gekennzeichnet, dass** ein Containersack als Abteilung verwendet wird.

12. Verfahren gemäß einem oder mehr der Ansprüche 9 - 11, **dadurch gekennzeichnet, dass** den Abteilungen während der Zeit, in der die Muscheln darin aufbewahrt werden, Sauerstoff und/oder Algen hinzugefügt werden.

13. Verfahren gemäß einem oder mehr der Ansprüche 9 - 12, **dadurch gekennzeichnet, dass** die Abteilungen gekühlt werden.

14. Verfahren gemäß Anspruch 13, **dadurch gekennzeichnet, dass** die Kühlung mittels Wasser, Eis, eines Luftstroms oder einer Kombination daraus geschieht.

15. Verfahren gemäß einem oder mehr der vorangegangenen Ansprüche, **dadurch gekennzeichnet, dass** Schritt iii) in einer solchen Weise durchgeführt wird, dass Muscheln unter einer festgelegten Größe zu einer Fortpflanzungsstätte zurückbefördert werden.

16. Verfahren gemäß einem oder mehr der vorangegangenen Ansprüche, **dadurch gekennzeichnet, dass** das Wasser auf eine Temperatur gekühlt wird, die mindestens 2 °C niedriger als die Temperatur des Meerwassers ist.

17. Verfahren gemäß einem oder mehr der vorangegangenen Ansprüche 9 - 16, **dadurch gekennzeichnet, dass** die Muscheln, nachdem sie sich in den Abteilungen an Bord des Schiffs befunden haben, zur Lagerung in einem oder mehr von Wasser durchströmten Lagerbecken an die Küste gebracht werden, bevor sie verpackt werden.

18. Verfahren gemäß Anspruch 17, **dadurch gekennzeichnet, dass** das Wasser auf eine Temperatur gekühlt wird, die mindestens 2 °C niedriger als die Temperatur des Meerwassers ist.

19. Verfahren gemäß Anspruch 17, **dadurch gekennzeichnet, dass** während des Transports an der Küste die Temperatur der Muscheln auf einem Niveau gehalten wird, das niedriger oder im Wesentlichen gleich der Temperatur ist, die an Bord des Schiffs herrschte.

20. Verfahren gemäß einem oder mehr der Ansprüche 17 - 19, **dadurch gekennzeichnet, dass** während des Transports an der Küste die Temperatur durch Kühlung mit Wasser, Eis, Luft oder einer Kombination daraus reguliert wird.

21. Verfahren gemäß einem oder mehr der Ansprüche 17 - 20, **dadurch gekennzeichnet, dass** das für die Kühlung verwendete Wasser wiederverwendet wird.

22. Ein Schiff zum Fischen von Muscheln aus dem Meer und zum Heraufholen des Fangs an Bord, **dadurch gekennzeichnet, dass** das Schiff mit Vorrichtungen zum Entfernen von muschelfremden Elementen aus dem Fang, mit Vorrichtungen zum eventuellen Abtrennen der Muscheln voneinander, mit Vorrichtungen zum Klassieren der Muscheln nach Größe und mit Vorrichtungen zum Pumpen von Wasser an Bord des Schiffs versehen ist.

## Revendications

1. Procédé de traitement de moules, dans lequel les moules sont péchées par l'intermédiaire d'un navire et sont amenées à bord, **caractérisé en ce que** les moules récoltées sont traitées à bord directement après que la prise a été monté à bord du navire, ledit traitement comprenant les étapes consistant à
i) retirer de la prise les éléments qui ne sont pas des moules,
ii) détacher éventuellement les moules obtenues à l'étape i) les unes des autres, et
iii) calibrer les moules obtenues à l'étape ii) selon leur taille,
dans lequel au moins l'une des étapes i) à iii) est réalisée en présence d'une quantité supplémentaire d'eau.

2. Procédé selon la revendication 1, **caractérisé en ce que** l'eau utilisée est de l'eau salée, en particulier de l'eau de mer.

3. Procédé selon la revendication 1, **caractérisé en ce que** la prise est amenée à bord de sorte que la prise est amenée dans un espace rempli d'eau.

4. Procédé selon l'une quelconque ou plusieurs des revendications précédentes, **caractérisé en ce que** l'oxygène est fourni à l'eau.

5. Procédé selon l'une quelconque ou plusieurs des revendications précédentes, **caractérisé en ce que** des algues sont ajoutées à l'eau.

6. Procédé selon l'une quelconque ou plusieurs des revendications précédentes, **caractérisé en ce que** l'eau est soumise à un traitement de désinfection choisi parmi l'irradiation avec une lumière UV et/ou le passage d'ozone au travers.

7. Procédé selon l'une quelconque ou plusieurs des revendications précédentes, **caractérisé en ce que** l'eau est purifiée pendant le temps où les moules s'y trouvent, en particulier en utilisant une ou plusieurs unités de filtration pour intercepter les bactéries, le sable, le limon, les protéines et/ou de la matière organique.

8. Procédé selon l'une quelconque ou plusieurs des revendications précédentes, **caractérisé en ce que** l'eau utilisée dans l'une ou plusieurs des étapes i) à iii) est recyclée.

9. Procédé selon l'une quelconque ou plusieurs des revendications précédentes, **caractérisé en ce que** les moules obtenues après l'étape iii) sont stockées dans des compartiments ou espaces séparés sur le navire.

10. Procédé selon la revendication 9, **caractérisé en ce que** les compartiments sont partiellement remplis d'eau avant d'y procéder au stockage.

11. Procédé selon l'une des revendications 9 ou 10 ou les deux, **caractérisé en ce qu'**un grand sac est utilisé en tant que ledit compartiment.

12. Procédé selon l'une quelconque ou plusieurs des revendications 9 à 11, **caractérisé en ce que** de l'oxygène et/ou des algues sont ajoutés au compartiment pendant le temps où les moules y sont conservées.

13. Procédé selon l'une quelconque ou plusieurs des revendications 9 à 12, **caractérisé en ce que** les compartiments sont refroidis.

14. Procédé selon la revendication 13, **caractérisé en ce que** ledit refroidissement a lieu au moyen d'eau, de glace, d'une circulation d'air ou d'une combinaison de ceux-ci.

15. Procédé selon l'une quelconque ou plusieurs des revendications précédentes, **caractérisé en ce que** l'étape iii) est réalisée de sorte que les moules de taille inférieure à une taille spécifiée sont renvoyées dans une zone de reproduction.

16. Procédé selon l'une quelconque ou plusieurs des revendications précédentes, **caractérisé en ce que** l'eau est refroidie à une température d'au moins 2 °C inférieure à la température de l'eau de mer.

17. Procédé selon l'une quelconque ou plusieurs des revendications 9 à 16, **caractérisé en ce que** les moules, après leur séjour dans les compartiments à bord du navire, sont transférées sur la côte pour stockage dans un ou plusieurs bassins de stockage, dans lesquels de l'eau circule, avant d'être emballées.

18. Procédé selon la revendication 17, **caractérisé en ce que** l'eau est refroidie à une température d'au moins 2 °C inférieure à la température de l'eau de mer.

19. Procédé selon la revendication 17, **caractérisé en ce que** pendant le transport sur la côte, la température des moules est maintenue à un niveau sensiblement inférieur ou égal à la température qui prédominait à bord du navire.

20. Procédé selon l'une quelconque ou plusieurs des revendications 17 à 19, **caractérisé en ce que** pendant le transport sur la côte, la température est régulée par refroidissement avec de l'eau, de la glace, de l'air ou une combinaison de ceux-ci.

21. Procédé selon l'une quelconque ou plusieurs des revendications 17 à 20, **caractérisé en ce que** l'eau utilisée pour le refroidissement est à nouveau utilisée.

22. Navire pour pêcher des moules de la mer et amener la prise à bord, **caractérisé en ce que** ledit navire est pourvu de moyens pour retirer de la prise les éléments qui ne sont pas des moules, de moyens pour détacher éventuellement les moules les unes des autres, de moyens pour calibrer les moules selon leur taille et de moyens pour pomper de l'eau à bord du navire.
